# EUROPÄISCHE PATENTANMELDUNG

(11) **EP 4 659 821 A1**
(43) Veröffentlichungstag der Anmeldung: **10.12.2025**
(21) Anmeldenummer: 25181105.5
(22) Anmeldetag: 05.06.2025
(51) Int. Cl.: A62C 2/12, F16L 5/04, A62C 2/06

(54) **BRANDSCHUTZTECHNISCHE EINRICHTUNG MIT EINER BRANDSCHUTZKLAPPE**

(30) Priorität: 06.06.2024 DE 202024102987 U
(71) Anmelder: Wildeboer Bauteile GmbH, 26826 Weener (DE)
(72) Erfinder: SPELLER, Frank, 26826 Weener (DE); ZANDER, Nils, 26826 Weener (DE); DORNBUSCH, Rainer, 26826 Weener (DE)
(74) Vertreter: Ter Meer Steinmeister & Partner

(57) **Zusammenfassung**

Brandschutztechnische Einrichtung mit einer in einer Wandöffnung angeordneten Brandschutzklappe (14), die ein Gehäuse (16) aus Metall aufweist, das zumindest abschnittsweise von einer Ummantelung (32) aus einem nichtmetallischen, feuerfesten Material umgeben ist, dadurch gekennzeichnet, dass zwischen der Laibung (12) der Wandöffnung und der Außenfläche der Ummantelung (32) ein Spalt besteht, der mit einer intumeszierenden Brandschutzmasse (36) ausgefüllt ist.

## Beschreibung

Die Erfindung betrifft eine brandschutztechnische Einrichtung mit einer in einer Wand- oder Deckenöffnung angeordneten Brandschutzklappe, die ein Gehäuse aus Metall aufweist, das zumindest abschnittsweise von einer Ummantelung aus einem nichtmetallischen, feuerfesten Material umgeben ist.

Brandschutzklappen werden in Lüftungsleitungen eingebaut, damit im Brandfall die Möglichkeit besteht, durch Schließen der Klappe die Ausbreitung des Brandes oder die Ausbreitung von Rauchgasen zu verhindern.

In EP 3 047 778 B1 wird eine brandschutztechnische Einrichtung mit einer Brandschutzklappe beschrieben, die in eine Öffnung einer aus Holzbaustoffen gebildeten Gebäudewand eingesetzt ist. Das Gehäuse der Brandschutzklappe weist eine Ummantelung auf, die den Zwischenraum zwischen dem äußeren Umfang der Brandschutzklappe und der Laibung der Wandöffnung ausfüllt. Dadurch wird nicht nur die Ausbreitung von Hitze und Gasen durch diesen Zwischenraum verhindert, sondern auch ein besserer Schutz der Laibung der Gebäudewand gegen Abbrand erreicht. Wenn die Länge der Ummantelung kleiner oder größer ist als die Dicke der Gebäudewand, so wird die Ummantelung bzw. die Gebäudewand durch eine Zurüstung ergänzt, damit die Länge der Fuge zwischen der Ummantelung und der Laibung der Wandöffnung maximiert wird, so dass der Brand länger braucht, sich durch diese Fuge hindurch auszubreiten.

Aufgabe der Erfindung ist es, eine Einreichung dieser Art zu schaffen, die sich einfacher installieren lässt.

Diese Aufgabe wird erfindungsgemäß dadurch gelöst, dass zwischen der Laibung der Wandöffnung und der Außenfläche der Ummantelung ein Spalt besteht, der mit einer intumeszierenden Brandschutzmasse ausgefüllt ist.

Intumeszierende Brandschutzmassen sind im Handel erhältlich und können ähnlich wie Polyurethan-Bauschaum aus einer Kartusche in abzudichtende Fugen zwischen Gebäudeteilen injiziert werden, wo sie dann aufquellen und die Fuge ausfüllen. Beim Aufquellen der Brandschutzmasse entsteht jedoch ein geringerer Druck als beim Aufquellen von Polyurethanschaum, so dass die Gefahr von Schäden an empfindlichen Gebäudeteilen geringer ist. Außerdem ist die Brandschutzmasse intumeszierend, d.h., dass sie im Brandfall aufgrund der Wärmeeinwirkung weiter aufquillt und so eine sicherere Abdichtung der Fuge bewirkt.

Erfindungsgemäß braucht die Ummantelung nicht exakt an das Innenmaß der Wandöffnung angepasst zu sein. Stattdessen wird der Zwischenraum mit der Brandschutzmasse ausgefüllt. Dadurch werden die Genauigkeitsanforderungen bei der Herstellung der Ummantelung aber auch bei der Herstellung der Wandöffnung erheblich verringert, so dass die Einrichtung sich einfacher und kostengünstiger installieren lässt. Beim initialen Aufquellen der Brandschutzmasse wird ein Teil dieser Masse aus dem Zwischenraum zwischen der Brandschutzklappe und der Laibung der Wandöffnung herausquellen. Dieser Teil der Brandschutzmasse kann nach dem Erstarren mit einem Messer abgetrennt und entfernt werden, so dass man eine flache Oberfläche erhält. Durch die Brandschutzmasse können auch größere Zwischenräume mit einer Breite von bis zu 80 mm überbrückt werden, so dass die Wandöffnung auch sehr grob, beispielsweise mit einer Kettesäge, hergestellt werden kann und dennoch eine zuverlässige Abdichtung erreicht wird.

Vorteilhafte Ausgestaltungen und Weiterbildungen der Erfindung sind in den Unteransprüchen angegeben.

Die Brandschutzmasse kann den Zwischenraum zwischen der Ummantelung und der Laibung auf der gesamten Dicke der Wand ausfüllen. Die Einrichtung lässt sich in Wänden mit unterschiedlicher Dicke installieren, ohne dass besondere Anpassungen der Brandschutzklappe oder der Ummantelung erforderlich sind. Dabei werden an die Konturform der Wand- / Deckenöffnung, in der die Brandschutzklappe installiert wird, keine Anforderungen gestellt, diese kann recht unregelmäßig bzw. ungenau erstellt werden.

Die Einrichtung lässt sich sowohl in Wänden aus Holz auch in Leichtbauwänden aus Gipskarton mit einer Tragkonstruktion aus Metallständern oder Holzständern oder in massiven Wänden aus Beton oder Mauerwerk installieren.

Im folgenden werden Ausführungsbeispiele anhand der Zeichnungen näher erläutert. Es zeigen:
- Fig. 1: einen Teilschnitt durch eine Gebäudewand mit einer Brandschutztechnischen Einrichtung in der Form einer Brandschutzklappe, die in eine Wandöffnung eingesetzt ist;
- Fig. 2: eine Ansicht aus Richtung der Pfeile II-II in Fig. 1; und
- Fig. 3: eine brandschutztechnische Einrichtung in einer Leichtbauwand.

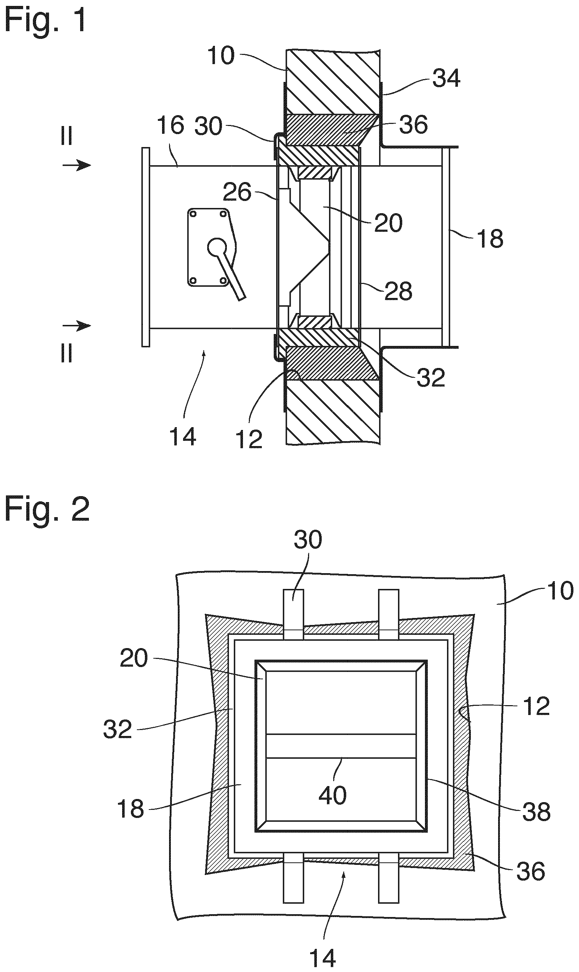

Gemäß Fig. 1 weist eine massive Gebäudewand 10, die beispielsweise aus Holz bestehen kann, eine Öffnung auf, die durch eine Laibung 12 begrenzt wird und in die eine Brandschutzklappe 14 eingesetzt ist. Die Brandschutzklappe weist ein rohrförmiges bzw. Kanalförmiges Gehäuse 16 aus Blech auf, das auf beiden Seiten aus der Wandöffnung herausragt und an jedem Ende einen Anschlussflansch 18 bildet, der den Anschluss an eine nicht gezeigte Lüftungsleitung ermöglicht. Im Bereich der Wandöffnung weist das Gehäuse 16 eine Einschnürung 20 auf. Im Inneren des Gehäuses 16 ist im Bereich dieser Einschnürung 20 ein nicht gezeigtes Klappenblatt angeordnet, dass um eine diametral durch das Gehäuse 16 verlaufende Achse schwenkbar ist. Eine Abdeckung 22 verdeckt das Ende dieser Achse sowie ein Antriebsgestänge, das die Achse mit einem Antrieb 24 für das Klappenblatt verbindet. Wenn das Klappenblatt etwa parallel zur Längsachse des Gehäuses 16 orientiert ist, so ist die Klappe geöffnet und die Luft kann an beiden Seiten des Klappenblattes entlangströmen. Mit Hilfe des Antriebs 24 lässt sich das Klappenblatt in eine Position schwenken, in der es den Innenquerschnitt der Einschnürung 20 vollständig verschließt. Beiderseits der Einschnürung 20 weist die Brandschutzklappe je ein umlaufendes Versteifungselement 26 bzw. 28 auf. Mit Hilfe der Versteifungselemente und zugehöriger Haltestege 30 lässt sich die Brandschutzklappe an der Gebäudewand 10 befestigen.

Die Brandschutzklappe 14 ist im Bereich der Einschnürung 20 von einer Ummantelung 32 aus feuerfestem und hitzebeständigem Material umgeben ist. Speziell wird die Ummantelung 32 in diesem Beispiel durch einen inneren Ring, der in der Einschnürung 20 liegt und dessen Außendurchmesser mit der Außenwand des Gehäuses 16 bündig ist, und einen Außenring gebildet, der die Einschnürung 20 und den inneren Ring vollständig abdeckt. Auf der Seite des Versteifungselements 28 wird der Sitz des Gehäuses 16 in der Wandöffnung durch Haltewinkel 34 stabilisiert, die mit einem Schenkel an der Wandfläche der Gebäudewand 10 befestigt sind und mit dem anderen Schenkel den Außenrand eines der Anschlussflansche 18 halten. Der ringförmige bzw. umlaufende Zwischenraum zwischen der Laibung 12 und der äußeren Umfangsfläche der Ummantelung 32 ist mit einer intumeszierenden Brandschutzmasse 36 ausgefüllt, so dass die Wandöffnung außerhalb der Brandschutzklappe 14 gasdicht verschlossen wird.

Bei der Installation der Brandschutzklappe wird das Gehäuse 16 zunächst mit Hilfe der Versteifungselemente 26, 28 mechanisch in der Wandöffnung fixiert. Anschließend wird die Brandschutzmasse aus einer Kartusche in den Zwischenraum zwischen der Ummantelung 32 und der Laibung 12 injiziert und durch ein in dieser Brandschutzmasse enthaltenes Treibmittel zum Aufschäumen gebracht, bis es diesen Zwischenraum vollständig ausfüllt. Wenn die aufgeschäumte Masse ausgehärtet ist, können überstehende Teile mit einem Messer abgeschnitten werden, so dass von der Brandschutzmasse 36 nur der Teil übrig bleibt, der den Zwischenraum zwischen den Versteifungselementen 26, 28 und der Laibung 12 ausfüllt.

In dem in Fig. 1 gezeigten Beispiel ist die Stirnfläche der Brandschutzmasse 36 auf der Seite des Versteifungselements 26 annähernd mit der Oberfläche der Gebäudewand bündig. Der Abstand zwischen den Versteifungselementen 26 und 28 ist jedoch kleiner als die Dicke der Wand, so dass sich auf der Seite des Versteifungselements 28 eine konische Stirnfläche ergibt.

Der Innendurchmesser der durch die Laibung 12 begrenzten Wandöffnung ist im gezeigten Beispiel größer als der Außendurchmesser der Anschlussflansche 18 und der Versteifungselemente 26, 28, so dass sich diese Flansche und Versteifungselemente bei der Montage durch die Wandöffnung hindurchschieben lassen, bis die in Fig. 1 gezeigte Position erreicht ist. Die Brandschutzklappe einschließlich der Versteifungselemente 26, 28 kann somit vorgefertigt werden und braucht nicht besonders an die Dicke der Gebäudewand 10 und den Durchmesser der Wandöffnung angepasst zu werden.

Durch die Brandschutzmasse 36 wird nicht nur eine zuverlässige Abdichtung an der mit der Laibung 12 gebildeten Fuge sowie auch an der mit der Einschnürung 20 gebildeten Fuge erreicht, sondern die Anordnung der Brandschutzklappe in der Wandöffnung auch mechanisch stabilisiert. Da es sich bei der Brandschutzmasse um ein intumeszierendes Material handelt, kommt es im Brandfall, wenn die Brandschutzmasse 32 größerer Hitze ausgesetzt ist, zu einem weiteren Aufquellen dieser Masse, wodurch die Dichtwirkung weiter verstärkt wird. Insbesondere quillt die intumeszierende Brandschutzmasse auf beiden Seiten der Wand über den Umfang der Laibung 12 über, so dass die Laibung noch besser gegen den Brandangriff geschützt wird.

Fig. 2 zeigt die Brandschutzklappe gemäß Fig. 1 in einer Ansicht aus Richtung der Pfeile II-II in Fig. 1. Von der Ummantelung 36 ist in Fig. 2 nur der äußere Rand zu erkennen, da der innere Teil ebenso wie das Versteifungselement 26 durch den Anschlussflansch 18 verdeckt sind. Ein Lüftungsrohr 38 mit quadratischem Querschnitt, das an den Anschlussflansch 18 anschließt, ist in Fig. 2 im Schnitt gezeigt. Innerhalb des Querschnitts dieses Lüftungsrohres sieht man die Innenfläche der Einschnürung 20 sowie ein Klappenblatt 40, das sich hier in der Öffnungsstellung befindet. Außerdem sind die Haltestege 30 zu erkennen, die den Rand der Ummantelung 32 übergreifen und weiter innen an dem hier nicht sichtbaren Versteifungselement 26 fixiert sind. Die Stirnfläche der Brandschutzmasse 36 ist in Fig. 2 aus Gründen der Deutlichkeit schraffiert angelegt. Man erkennt, dass die Laibung 12 in diesem Beispiel eine sehr unregelmäßige Form hat, da die Wandöffnung nur sehr grob bearbeitet wurde. Dies ist möglich, da die Brandschutzmasse 36 den Zwischenraum zwischen der Laibung 12 und der Ummantelung 34 vollständig ausfüllt.

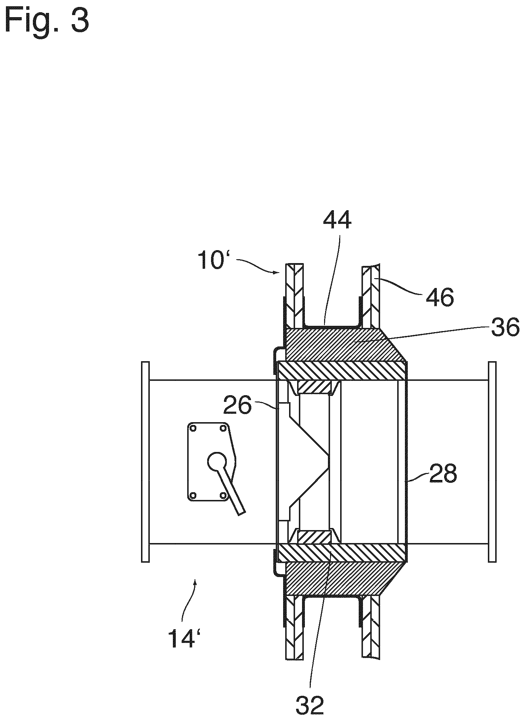

Fig. 3 zeigt eine ähnliche Brandschutzklappe 14' wie Fig. 1, jedoch eingebaut in eine Gebäudewand 10', die eine kleinere Dicke hat. Auch hier füllt die Brandschutzmasse 36 den Zwischenraum zwischen der Laibung 12 und der zwischen den Versteifungselementen 26, 28 eingeschlossenen Ummantelung 32 vollständig aus, so dass die Laibung 12 auf ganzer Länge gegen den Brandangriff geschützt wird. Da jedoch die Dicke der Wand in diesem Fall kleiner ist als der Abstand zwischen den Versteifungselementen 26, 28, wird die Brandschutzmasse auf der Seite des Versteifungselements 28 durch eine konische Fläche begrenzt, die sich nach außen verjüngt.

Die Gebäudewand 10' ist in diesem Beispiel eine Leichtbauwand, die ein Ständerwerk aus U-förmigen Metallprofilen 44 aufweist und auf beiden Seiten mit Gipskartonplatten 46 beplankt ist. Die Laibung der Wandöffnung wird in diesem Fall hauptsächlich durch einen aus den Metallprofilen 44 gebildeten Rahmen gebildet.

In den gezeigten Ausführungsbeispielen hat das Gehäuse 16 einen quadratischen Querschnitt. Wahlweise könnte das Gehäuse jedoch auch einen anderen, beispielsweise kreisförmigen Querschnitt haben.

Die Brandschutzmasse 36 haftet gut an einer Vielzahl unterschiedlicher Materialien, so dass sich die hier gezeigte Einbauweise der Brandschutzklappe beispielsweise auch bei Betonwänden oder Wänden aus Mauerwerk realisieren lässt. Wahlweise kann die Brandschutzklappe auch von einer Decke abgehängt werden.

## Patentansprüche

1. Brandschutztechnische Einrichtung mit einer in einer Wandöffnung angeordneten Brandschutzklappe (14), die ein Gehäuse (16) aus Metall aufweist, das zumindest abschnittsweise von einer Ummantelung (32) aus einem nichtmetallischen, feuerfesten Material umgeben ist, **dadurch gekennzeichnet, dass** zwischen der Laibung (12) der Wandöffnung und der Außenfläche der Ummantelung (32) ein Spalt besteht, der mit einer intumeszierenden Brandschutzmasse (36) ausgefüllt ist.

2. Einrichtung nach Anspruch 1, bei der die Brandschutzklappe (14) ein Gehäuse (16) mit mindestens einem Versteifungselement (26) aufweist, das mittels Haltestegen (30) an der die Wandöffnung bildenden Gebäudewand (10) gehalten ist.

3. Einrichtung nach Anspruch 2, bei der das Gehäuse (16) zwei in Abstand zueinander angeordnete Versteifungselemente (26, 28) aufweist und die Brandschutzmasse (32) den Zwischenraum zwischen den Versteifungselementen vollständig ausfüllt.

4. Einrichtung nach Anspruch 3, bei der der Abstand zwischen den Versteifungselementen (26, 28) von der Dicke der Gebäudewand (10; 10') verschieden ist und die Brandschutzmasse (32) die Laibung (12) der Wandöffnung auf ihrer gesamten Tiefe bedeckt.

5. Einrichtung nach einem der vorstehenden Ansprüche, bei der die Länge der Ummantelung (34) von der Dicke der die Wandöffnung bildenden Gebäudewand (10'; 10") verschieden ist und die Brandschutzmasse (32) die Laibung (12) der Wandöffnung auf ihrer gesamten Tiefe bedeckt.

6. Einrichtung nach einem der vorstehenden Ansprüche, bei der die Laibung (12) der Wandöffnung eine unregelmäßige Form hat.
